# EUROPEAN PATENT SPECIFICATION

(11) **EP 2 983 228 B1**
(45) Date of publication and mention of the grant of the patent: **15.11.2017**
(21) Application number: 15179316.3
(22) Date of filing: 31.07.2015
(51) Int. Cl.: H01M 2/02, H01M 2/08, H01M 10/04

(54) **ELECTROCHEMICAL ENERGY STORAGE DEVICE**
ELEKTROCHEMISCHE STROMSPEICHERVORRICHTUNG
DISPOSITIF DE STOCKAGE D'ÉNERGIE ÉLECTROCHIMIQUE

(30) Priority: 05.08.2014 CN 201410381717
(43) Date of publication of application: 10.02.2016
(73) Proprietor: Dongguan Amperex Technology Limited, Dongguan 523808 (CN); NingDe Amperex Technology Limited, 352100 Ningde City Fujian (CN)
(72) Inventor: BAO, Jinzhen, 523808 Dongguan (CN); YU, Honggang, 523808 Dongguan (CN); FANG, Hongxin, 523808 Dongguan (CN); LAI, Liehua, 523808 Dongguan (CN); YANG, Chao, 523808 Dongguan (CN); LI, Ming, 523808 Dongguan (CN)
(74) Representative: Manitz Finsterwald Patentanwälte PartmbB

(56) References cited:
- EP-A1- 2 492 992
- EP-A2- 1 641 057
- GB-A- 2 193 834
- JP-A- H10 247 524
- JP-A- H11 111 250
- US-A1- 2014 177 141

## Description

### FIELD OF THE INVENTION

The present invention relates to a field of an electrochemistry technology, and more specifically to an electrochemical energy storage device. The features of the preamble of the independent claim are known from JP H11 111250 A. JP H11 111250A further describes a battery cell pouch attached to a further battery casing by means of pressure sensitive adhesive double coated tapes. Related technologies are known from EP 1 641 057 A2 and EP 2 492 992 A1.

### BACKGROUND OF THE INVENTION

Due to advantages, such as a high operating voltage, a small volume, a light weight, a high specific capacity, non-memory effect, non-pollution, a small self-discharge and a long cycle life, a lithium-ion secondary battery has been widely applied in various fields, such as communication, electrical appliance, electronic information, power device, storage device and the like, and as the society develops rapidly, people present higher requirements on the lithium-ion secondary battery in energy density, charge-discharge rate, cycle life and safety performance.

Drop test is a relatively strict safety test of the lithium-ion secondary battery. Problems, that top sealing is burst out, electrolyte is leaked, separator wrinkles, internal short circuit is established, tab is broken, and so on, easily occur when the lithium-ion secondary battery is dropped. At present, using an adhesive tape to tie a cell up or enlarging a region for the top sealing may resolve the problems, that top sealing is burst out, electrolyte is leaked and tab is broken, but the above two methods will decrease the energy density of the lithium-ion secondary battery, and cannot resolve the problems that separator shrinks and wrinkles and internal short circuit is established when the lithium-ion secondary battery is dropped. By adhering the conventional double-sided adhesive paper to a position between the cell and a package may resolve the above problems when the lithium-ion secondary battery is dropped, but because the two surfaces of the adhesive paper are all adhesive, it is more difficult to put the cell into the package.

### SUMMARY OF THE INVENTION

In view of the problems existing in the background of the present invention, an object of the present invention is to provide an electrochemical energy storage device, the electrochemical energy storage device of the present invention as defined in the independent claim can not only fixedly connect the cell to the package so as to resolve the problems during the drop test, but also can resolve the problem that the cell is difficult to put into the package because the two surfaces of the binding material are all adhesive.

In order to achieve the above object, the present invention provides an electrochemical energy storage device, which comprises a cell, an electrolyte and a package. The cell is composed of a positive electrode plate, a negative electrode plate and a separator positioned between the positive electrode plate and the negative electrode plate; the electrolyte immerses the cell; the package accommodates the cell and the electrolyte. The electrochemical energy storage device further comprises a binding material positioned between the cell and the package. The binding material comprises a first adhesive layer and a second functional layer. The first adhesive layer is directly adhered and positioned on an outer surface of the cell; the second functional layer is positioned on a side of the first adhesive layer opposite to a surface of the first adhesive layer directly adhered on the cell, the second functional layer is not adhered to the package before a pressure is applied on the electrochemical energy storage device, and the second functional layer is adhered to the package after the pressure is applied on the electrochemical energy storage device.

The present invention has following beneficial effects:
1. The second functional layer of the binding material of the present invention is not adhered to the package before a pressure is applied on the electrochemical energy storage device, therefore the problem that the cell is difficult to put into the package because of the two adhesive surfaces of the binding material is resolved.
2. After the binding material of the present invention is put into the package, and the second functional layer is adhered to the package under a pressure, therefore the cell can be fixedly connected to the package and the problems during the drop test can be resolved.

### BRIEF DESCRIPTION OF THE DRAWINGS

Figure 1 is a partial sectional view illustrating an electrochemical energy storage device of an embodiment of the present invention;
Figure 2 is a partial sectional view illustrating an electrochemical energy storage device of another embodiment of the present invention;
Figure 3 is a schematic view illustrating a configuration of an embodiment of a binding material of the electrochemical energy storage device of the present invention;
Figure 4 is a schematic view illustrating a configuration of another embodiment of the binding material of the electrochemical energy storage device of the present disclosure;
Figure 5 is a schematic view illustrating a configuration of yet another embodiment of the binding material of the electrochemical energy storage device of the present invention;
Figure 6 is a schematic view illustrating a configuration of still another embodiment of the binding material of the electrochemical energy storage device of the present invention; and
Figure 7 is a schematic view exaggeratedly illustrating a configuration of yet another embodiment of the electrochemical energy storage device of the present invention taken along a line A-A of Figure 1.

Reference numerals of the embodiments are represented as follows:
1 cell
11 ending
2 package
3 binding material
31 first adhesive layer
32 second functional layer
33 substrate
34 covering layer
4 adhesive paper

### DETAILED DESCRIPTION OF THE INVENTION

Hereinafter an electrochemical energy storage device and examples, comparative examples and testing processes and test results according to the present invention will be described in detail.

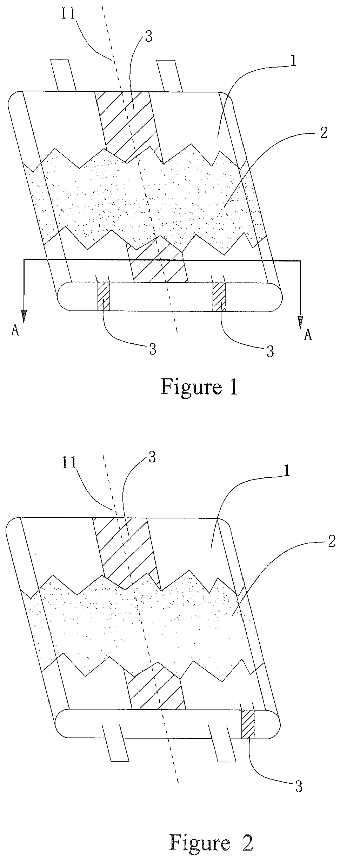

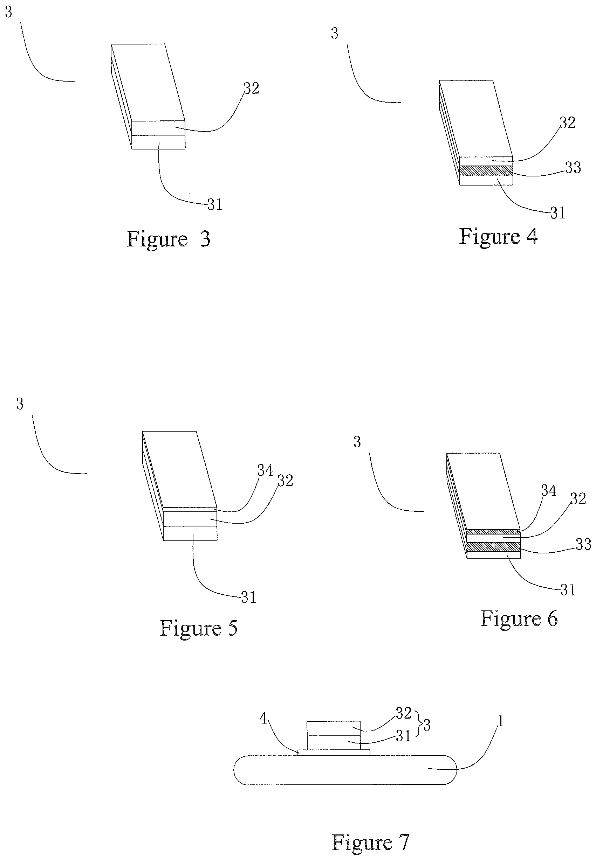

Firstly, an electrochemical energy storage device according to a first aspect of the present invention will be described. Referring to Figures. 1-2, an electrochemical energy storage device according to a first aspect of the present invention comprises a cell 1, an electrolyte and a package 2. The cell 1 is composed of a positive electrode plate, a negative electrode plate and a separator positioned between the positive electrode plate and the negative electrode plate; the electrolyte immerses the cell 1; the package 2 accommodates the cell 1 and the electrolyte. The electrochemical energy storage device further comprises: a binding material 3 positioned between the cell 1 and the package 2. The binding material 3 comprises a first adhesive layer 31 and a second functional layer 32, referring to Figure 3. The first adhesive layer 31 is directly adhered and positioned on an outer surface of the cell 1; the second functional layer 32 is positioned on a side of the first adhesive layer 31 opposite to a surface of the first adhesive layer 31 directly adhered on the cell 1, the second functional layer 32 is not adhered to the package 2 before a pressure is applied on the electrochemical energy storage device, and the second functional layer 32 is adhered to the package 2 after the pressure is applied on the electrochemical energy storage device.

In the electrochemical energy storage device according to the first aspect of the present invention, the second functional layer 31 of the binding material 3 of the present invention is not adhered to the package 2 before a pressure is applied on the electrochemical energy storage device, therefore the problem that the cell is difficult to put into the package 2 because of the two adhesive surfaces of the binding material 3 can be resolved; after the binding material 3 of the present invention is put into the package 2, and the second functional layer 32 is adhered to the package 2 under the pressure, therefore the cell 1 can be fixedly connected to the package 2 and the problems during the drop test can be resolved.

In the electrochemical energy storage device according to the first aspect of the present invention, the electrochemical energy storage device may be one selected from lithium-ion secondary battery, super capacitor, fuel cell and solar battery.

In the electrochemical energy storage device according to the first aspect of the present invention, the cell 1 may be a wound cell, a laminated cell, or a laminated-wound cell.

In the electrochemical energy storage device according to the first aspect of the present invention, the binding material 3 may be provided at any position between the cell 1 and the package 2. For example, the binding material 3 may be adhered and positioned at an ending 11 of the wound cell 1, or the binding material 3 may be adhered and positioned at any position of the outer surface of the cell 1 facing the package 2, the binding materials 3 may be adhered and positioned respectively across and surround the top and the bottom of the cell 1 and perpendicular to the width direction of the cell 1 at the same time, and any edge or corner of the cell 1 may be adhered with the binding material 3, or several positions each may be adhered with the binding material 3 at the same time. An area of the binding material 3 may be not more than a surface area of the cell 1, a shape of the binding material 3 may be any shapes, such as rectangular shape, circular shape, diamond shape, triangular shape, annular shape, gyrose shape, porous shape and the like.

In the electrochemical energy storage device according to the first aspect of the present invention, the package 2 may be one selected from soft package and hard package.

In the electrochemical energy storage device according to a further aspect not forming part of the present invention, referring to Figure 7, the electrochemical energy storage device may further comprise an adhesive paper 4 having single adhesive surface or double adhesive surfaces, positioned between the cell 1 and the binding material 3. One adhesive surface of the adhesive paper 4 is adhered and positioned on the outer surface of the cell 1 and the other surface of the adhesive paper 4 is adhered and connected to the binding material 3 so as to make the binding material 3 indirectly adhered and positioned on the outer surface of the cell 1.

A base material of the adhesive paper 4 having single adhesive surface or double adhesive surfaces may be at least one selected from a group consisting of polyethylene terephthalate (PET), oriented polypropylene (PP) and polyimide (PI); an adhesive of the adhesive paper 4 having single adhesive surface or double adhesive surfaces may be at least one selected from a group consisting of acrylic resin, thermosetting polyurethane, silicone, natural rubber and synthetic rubber.

A thickness of the adhesive paper 4 may be 3µm∼20µm.

In the electrochemical energy storage device according to the first aspect of the present invention, a thickness of the first adhesive layer 31 may be 3µm∼40µm.

In the electrochemical energy storage device according to the first aspect of the present invention, a thickness of the second functional layer 32 may be 3µm∼40µm.

In the electrochemical energy storage device according to the first aspect of the present invention, the pressure applied on the electrochemical energy storage device may be 0.2MPa∼1.5MPa.

In the electrochemical energy storage device according to the first aspect of the present invention, the electrochemical energy storage device is at the room temperature or a temperature above the room temperature when the pressure is applied on the electrochemical energy storage device.

In the electrochemical energy storage device according to the first aspect of the present invention, at least one of the first adhesive layer 31 and the second functional layer 32 may have flowability. Take the first adhesive layer 31 may have flowability as an example, in this situation, after the cell 1 is put into the package 2, and under the pressure, since the first adhesive layer 31 has flowability, therefore a part of the adhesive material in the first adhesive layer 31 such as the temperature sensitive adhesive and pressure sensitive adhesive having initial adhesion later described, is extruded and overflowed out from the outer peripheral of the initial position of the first adhesive layer 31 under the pressure, thereby not only decreasing the thickness of the binding material 3, but also increasing the adhesive area, so the cell 1 and the package 2 are more fixedly connected.

In the electrochemical energy storage device according to the first aspect of the present invention, the first adhesive layer 31 may be at least one selected from a group consisting of a temperature sensitive adhesive and a pressure sensitive adhesive having initial adhesion. The temperature sensitive adhesive may be at least one selected from a group consisting of terpine resin, petroleum resin, naphthenoid oil, polyolefine, polyvinyl butyral, polyamide, ethylene-vinyl acetate copolymer (EVA), styrene-isopentadiene-styrene block copolymer (SIS) and polyester, the naphthenoid oil cannot be used independently. The polyolefine may be at least one selected from a group consisting of polypropylene (PP), polybutylene (PB), polyisoprene (PI) and polystyrene (PS). The polyamide may be at least one selected from a group consisting of polyacrylamide (PAM), polycaprolactam (PA-6) and epoxy polyamide. The polyester may be at least one selected from a group consisting of thermoplastic polyurethane (TPU), nitrile butadiene rubber-phenol formaldehyde and ethylene-phenol formaldehyde. The pressure sensitive adhesive having initial adhesion may be at least one selected from a group consisting of acrylic resin, thermosetting polyurethane, silicone, natural rubber and synthetic rubber. The pressure sensitive adhesive having initial adhesion refers to that at room temperature, when a brief contact is formed between an object and a pressure sensitive adhesive under an acupressure, the pressure sensitive adhesive will perform adhesive fuction on the object.

In the electrochemical energy storage device according to the first aspect of the present invention, the first adhesive layer 31 may further comprise an inorganic additive. The inorganic additive may be at least one selected from a group consisting of Al₂O₃ and SiO₂.

In the electrochemical energy storage device according to the first aspect of the present invention, the second functional layer 32 is selected from a pressure sensitive adhesive having no initial adhesion or a composite material composited by the pressure sensitive adhesive having no initial adhesion and a temperature sensitive adhesive having no adhesion at room temperature. The pressure sensitive adhesive having no initial adhesion may be at least one selected from a group consisting of ethylene-butylenes-styrene linear triblock copolymer (SEBS), styrene-butadiene block copolymer (SEPS) and epoxidized styrene-isopentadiene-styrene block copolymer (ESIS). The temperature sensitive adhesive having no adhesion at room temperature may be at least one selected from a group consisting of polyolefine, polyvinyl butyral, polyamide, ethylene-vinyl acetate copolymer (EVA), styrene-isopentadiene-styrene block copolymer (SIS) and polyester. The polyolefine may be at least one selected from a group consisting of polypropylene (PP), polybutylene (PB), polyisoprene (PI) and polystyrene (PS). The polyamide may be at least one selected from a group consisting of polyacrylamide (PAM), polycaprolactam (PA-6) and epoxy polyamide. The polyester may be at least one selected from a group consisting of thermoplastic polyurethane (TPU), nitrile butadiene rubber-phenol formaldehyde and ethylene-phenol formaldehyde. The pressure sensitive adhesive having no initial adhesion refers to that at room temperature, when a brief contact is formed between an object and a pressure sensitive adhesive under an acupressure, the pressure sensitive adhesive doesn't perform adhesive function on the object.

In the electrochemical energy storage device according to the first aspect of the present invention, the second functional layer 32 may further comprise an inorganic additive. The inorganic additive may be at least one selected from a group consisting of Al₂O₃ and SiO₂.

In the electrochemical energy storage device according to the first aspect of the present invention, the binding material 3 may further comprise a substrate 33 positioned between the first adhesive layer 31 and the second functional layer 32, referring to Figure 4.

In the electrochemical energy storage device according to the first aspect of the present invention, a thickness of the substrate 33 may be not more than 20µm.

In the electrochemical energy storage device according to the first aspect of the present invention, the substrate 33 may be at least one selected from a group consisting of polyethylene terephthalate (PET), oriented polyolefine and polyimide (PI). The oriented polyolefine may be at least one selected from a group consisting of oriented polyethylene (PE), oriented polypropylene (PP), oriented polybutylene (PB), oriented ethylene-propylene copolymer and oriented polystyrene (PS).

In the electrochemical energy storage device according to the first aspect of the present invention, referring to Figures. 5-6, the binding material 3 may further comprise a covering layer 34 positioned on an outer surface of the second functional layer 32. The covering layer 34 is all or partly destroyed after the pressure is applied on the electrochemical energy storage device so as to expose the second functional layer 32, and then the second functional layer 32 connects the cell 1 to the package 2. At this time, the second functional layer 32 may be at least one selected from a group consisting of a pressure sensitive adhesive and a temperature sensitive adhesive. The pressure sensitive adhesive may be at least one selected from a group consisting of ethylene-butylenes-styrene linear triblock copolymer (SEBS), styrene-butadiene block copolymer (SEPS) and epoxidized styrene-isopentadiene-styrene block copolymer (ESIS). The temperature sensitive adhesive may be at least one selected from a group consisting of terpine resin, petroleum resin, naphthenoid oil, polyolefine, polyvinyl butyral, polyamide, ethylene-vinyl acetate copolymer (EVA), styrene-isopentadiene-styrene block copolymer (SIS) and polyester, the naphthenoid oil cannot be used independently. The polyolefine may be at least one selected from a group consisting of polypropylene (PP), polybutylene (PB), polyisoprene (PI) and polystyrene (PS). The polyamide may be at least one selected from a group consisting of polyacrylamide (PAM), polycaprolactam (PA-6) and epoxy polyamide. The polyester may be at least one selected from a group consisting of thermoplastic polyurethane (TPU), nitrile butadiene rubber-phenol formaldehyde and ethylene-phenol formaldehyde. The second functional layer 32 may further comprise an inorganic additive. The inorganic additive may be at least one selected from a group consisting of Al₂O₃ and SiO₂.

In the electrochemical energy storage device according to the first aspect of the present invention, the covering layer 34 may be at least one selected from a group consisting of Al₂O₃, MgO and Mg₃N₂.

In the electrochemical energy storage device according to the first aspect of the present invention, a thickness of the covering layer 34 may be 2µm∼10µm.

In the electrochemical energy storage device according to the first aspect of the present invention, the use of the inorganic additive may effectively control the homogeneous flow of the first adhesive layer 31 and the second functional layer 32, therefore the binding material 3 will not flow to a sealing edge of the cell 1 under heating and pressing, thereby resolving the problem of poor sealing caused by the inhomogeneous flow of the binding material 3.

Then examples and comparative examples of electrochemical energy storage devices according to the present invention would be described, the first binding material and the second binding material were two different types of the binding material 3 of the present invention.

### Example 1

### 1. Preparation of a positive electrode plate

LiCoO₂, conductive carbon and polyvinylidene fluoride according to a weight ratio of 96:1:3 were uniformly mixed with N-methyl pyrrolidone to form a positive electrode slurry, then the positive electrode slurry was coated, dried and pressed to form a positive electrode plate with a thickness of 100µm.

### 2. Preparation of a negative electrode plate

Graphite, conductive carbon, sodium carboxymethyl cellulose and styrene butadiene rubber according to a weight ratio of 97:1:1:1 were uniformly mixed with deionized water to form a negative electrode slurry, then the negative electrode slurry was coated, dried and pressed to form a negative electrode plate with a thickness of 90µm.

### 3. Preparation of an electrolyte

Ethylene carbonate (EC), propylene carbonate (PC), diethyl carbonate (DEC) and ethyl methyl carbonate (EMC) according to a weight ratio of 20:20:50:10 were uniformly mixed to form a non-aqueous organic solvent, LiPF₆ was added with a concentration of 1.0mol/L, finally an electrolyte was completed.

### 4. Preparation of a cell

The prepared positive electrode plate, a PP separator and the negative electrode plate were wound together to form a wound cell with a thickness of 3.5mm, a width of 48mm and a length of 80mm.

### 5. Preparation of a binding material

A length of the binding material was 75mm, and a width of the binding material was 8mm;
the first adhesive layer was polybutylene (PB) having added terpine resin, the thickness of the first adhesive layer was 20µm;
the second functional layer was a mixture of ethylene-vinyl acetate copolymer (EVA) and ethylene-butylenes-styrene linear triblock copolymer (SEBS) according to a mass ratio of 9:1, the thickness of the second functional layer was 3µm;
the substrate was oriented polypropylene (PP), the substrate was positioned between the first adhesive layer and the second functional layer, the thickness of the substrate was 10µm.

### 6. Preparation of a lithium-ion secondary battery

The first adhesive layer of the binding material was directly adhered at an ending of the wound cell, and then the wound cell was put into a package, the electrolyte was injected, then at 60°C, a 1MPa surface pressure was applied on a surface of the package of the wound cell corresponding to a position where the binding material was adhered, to make the second functional layer adhered with the inner surface of the package, finally a lithium-ion secondary battery was completed.

### Example 2

The lithium-ion secondary battery was prepared the same as that in example 1 except the following:

### 5. Preparation of a binding material

The thickness of the second functional layer was 20µm.

### Example 3

The lithium-ion secondary battery was prepared the same as that in example 1 except the following:

### 5. Preparation of a binding material

The thickness of the second functional layer was 40µm.

### Example 4

The lithium-ion secondary battery was prepared the same as that in example 1 except the following:

### 5. Preparation of a binding material (referring to Figure 4)

### (1) First binding material

The length of the first binding material was 75mm, the width of the first binding material was 8mm;
the first adhesive layer was polybutylene (PB) having added terpine resin, the thickness of the first adhesive layer was 20µm;
the second functional layer was a mixture of ethylene-vinyl acetate copolymer (EVA) and ethylene-butylenes-styrene linear triblock copolymer (SEBS) according to a mass ratio of 9:1, the thickness of the second functional layer was 20µm;
the substrate was oriented polypropylene (PP), the substrate was positioned between the first adhesive layer and the second functional layer, the thickness of the substrate was 10µm.

### (2) Second binding material

The length of the second binding material was 30mm, the width of the second binding material was 8mm;
the first adhesive layer was polybutylene (PB) having added terpine resin, the thickness of the first adhesive layer was 20µm;
the second functional layer was a mixture of ethylene-vinyl acetate copolymer (EVA) and ethylene-butylenes-styrene linear triblock copolymer (SEBS) according to a mass ratio of 9:1, the thickness of the second functional layer was 20µm;
the substrate was oriented polypropylene (PP), the substrate was positioned between the first adhesive layer and the second functional layer, the thickness of the substrate was 10µm.

### 6. Preparation of a lithium-ion secondary battery

Referring to Figure 1 and Figure 2, the first adhesive layer of the first binding material and the first adhesive layer of the second binding material were directly adhered on the surfaces of the wound cell, wherein one first binding material was adhered at the ending of the wound cell, two second binding materials were adhered on positions perpendicular to the width direction of the wound cell and across and surrounding the bottom of the wound cell, one second binding material was adhered on a position perpendicular to the width direction of the wound cell and across and surrounding the top of the wound cell, then the wound cell having the first binding material and the second binding materials was put into the package, the electrolyte was injected, then at 60°C, a 1MPa surface pressure was applied respectively on surfaces of the package of the wound cell corresponding to positions where the first binding material and the second binding materials were adhered, to make the second functional layer adhered with the inner surface of the package, finally a lithium-ion secondary battery was completed.

### Example 5

The lithium-ion secondary battery was prepared the same as that in example 4 except the following:

### 5. Preparation of a binding material

### (1) First binding material

The length of the first binding material was 75mm, the width of the first binding material was 8mm;
the first adhesive layer was polybutylene (PB) having added terpine resin, the thickness of the first adhesive layer was 20µm;
the second functional layer was a mixture of ethylene-vinyl acetate copolymer (EVA) and ethylene-butylenes-styrene linear triblock copolymer (SEBS) according to a mass ratio of 9:1, the thickness of the second functional layer was 20µm;
the substrate was oriented polypropylene (PP), the substrate was positioned between the first adhesive layer and the second functional layer, the thickness of the substrate was 10µm.

### (2) Second binding material

The length of the second binding material was 30mm, the width of the second binding material was 8mm;
the first adhesive layer was polybutylene (PB) having added terpine resin, the thickness of the first adhesive layer was 20µm;
the second functional layer was a mixture of ethylene-vinyl acetate copolymer (EVA) and ethylene-butylenes-styrene linear triblock copolymer (SEBS) according to a mass ratio of 9:1, the thickness of the second functional layer was 20µm;
the substrate was oriented polypropylene (PP), the substrate was positioned between the first adhesive layer and the second functional layer, the thickness of the substrate was 10µm.

### (3) Green glue

The length of the green glue was 75mm, the width of the green glue was 8mm, the green glue comprised polyethylene terephthalate (PET) and acrylic resin, the thickness of the polyethylene terephthalate (PET) was 7µm, the thickness of the acrylic resin was 8µm.

### 6. Preparation of a lithium-ion secondary battery

Referring to Figure 1 and Figure 2, the first adhesive layer of the first binding material and the first adhesive layer of the second binding material were directly adhered on the surfaces of the wound cell, wherein one first binding material was adhered on the surface of the wound cell opposite to the surface of the wound cell where the ending of the wound cell was present, two second binding materials were adhered on positions perpendicular to the width direction of the wound cell and across and surrounding the bottom of the wound cell, one second binding material was adhered on a position perpendicular to the width direction of the wound cell and across and surrounding the top of the wound cell, one green glue was adhered at the ending of the wound cell, and the acrylic resin of the green glue was faced to the wound cell, then the wound cell having the first binding material and the second binding materials and the green glue was put into the package, the electrolyte was injected, then at 60°C, a 1MPa surface pressure was applied respectively on surfaces of the package of the wound cell corresponding to positions where the first binding material and the second binding materials and the green glue were adhered, to make the second functional layer and the inner surface of the package adhered, finally a lithium-ion secondary battery was completed.

### Example 6

The lithium-ion secondary battery was prepared the same as that in example 4 except the following:

### 5. Preparation of a binding material

### (1) First binding material

The second functional layer was a mixture of ethylene-vinyl acetate copolymer (EVA) and epoxidized styrene-isopentadiene-styrene block copolymer (ESIS) according to a mass ratio of 9:4.

### (2) Second binding material

The second functional layer was a mixture of ethylene-vinyl acetate copolymer (EVA) and epoxidized styrene-isopentadiene-styrene block copolymer (ESIS) according to a mass ratio of 9:4.

### 6. Preparation of a lithium-ion secondary battery

Then the wound cell having the first binding material and the second binding materials was put into the package, the electrolyte was injected, then at 25°C, a 1MPa surface pressure was applied respectively on surfaces of the package of the wound cell corresponding to positions where the first binding material and the second binding materials were adhered, to make the second functional layer adhered with the inner surface of the package, finally a lithium-ion secondary battery was completed.

### Example 7

The lithium-ion secondary battery was prepared the same as that in example 4 except the following:

### 5. Preparation of a binding material

### (1) First binding material

The first adhesive layer was styrene-isopentadiene-styrene block copolymer (SIS) having added terpine resin, the thickness of the first adhesive layer was 30µm;
the second functional layer was a mixture of styrene-isopentadiene-styrene block copolymer (SIS) and styrene-butadiene block copolymer (SEPS) according to a mass ratio of 1:1, the thickness of the second functional layer was 40µm;
the substrate was polyethylene terephthalate (PET).

### (2) Second binding material

The first adhesive layer was styrene-isopentadiene-styrene block copolymer (SIS) having added terpine resin, the thickness of the first adhesive layer was 30µm;
the second functional layer was a mixture of styrene-isopentadiene-styrene block copolymer (SIS) and styrene-butadiene block copolymer (SEPS) according to a mass ratio of 1:1, the thickness of the second functional layer was 40µm;
the substrate was polyethylene terephthalate (PET).

### 6. Preparation of a lithium-ion secondary battery

Then the wound cell having the first binding material and the second binding materials was put into the package, the electrolyte was injected, then at 85°C, a 1MPa surface pressure was applied respectively on surfaces of the package of the wound cell corresponding to positions where the first binding material and the second binding materials were adhered, to make the second functional layer adhered with the inner surface of the package, finally a lithium-ion secondary battery was completed.

### Example 8

The lithium-ion secondary battery was prepared the same as that in example 7 except the following:

### 5. Preparation of a binding material

### (1) First binding material

The first adhesive layer was styrene-isopentadiene-styrene block copolymer (SIS) having added terpine resin and Al₂O₃;
the second functional layer was a mixture of styrene-isopentadiene-styrene block copolymer (SIS) having added Al₂O₃ and styrene-butadiene block copolymer (SEPS).

### (2) Second binding material

The first adhesive layer was styrene-isopentadiene-styrene block copolymer (SIS) having added terpine resin and Al₂O₃;
the second functional layer was a mixture of styrene-isopentadiene-styrene block copolymer (SIS) having added Al₂O₃ and styrene-butadiene block copolymer (SEPS).

### Example 9

The lithium-ion secondary battery was prepared the same as that in example 4 except the following:

### 5. Preparation of a binding material

### (1) First binding material

The second functional layer was styrene-butadiene block copolymer (SEPS);
the substrate was polyethylene terephthalate (PET).

### (2) Second binding material

The second functional layer was styrene-butadiene block copolymer (SEPS);
the substrate was polyethylene terephthalate (PET).

### 6. Preparation of a lithium-ion secondary battery

Then the wound cell having the first binding material and the second binding materials was put into the package, the electrolyte was injected, then at 25°C, a 0.2MPa surface pressure was applied respectively on surfaces of the package of the wound cell corresponding to positions where the first binding material and the second binding materials were adhered, to make the second functional layer adhered with the inner surface of the package, finally a lithium-ion secondary battery was completed.

### Example 10

The lithium-ion secondary battery was prepared the same as that in example 9 except the following:

### 6. Preparation of a lithium-ion secondary battery

The surface pressure applied was 0.6MPa.

### Example 11

The lithium-ion secondary battery was prepared the same as that in example 9 except the following:

### 6. Preparation of a lithium-ion secondary battery

The surface pressure applied was 0.8MPa.

### Example 12

The lithium-ion secondary battery was prepared the same as that in example 4 except the following:

### 5. Preparation of a binding material

### (1) First binding material

The width of the first binding material was 11mm;
the first adhesive layer was polybutylene (PB) having added petroleum resin, the thickness of the first adhesive layer was 10µm;
the second functional layer was a mixture of thermoplastic polyurethane (TPU) and styrene-butadiene block copolymer (SEPS) according to a mass ratio of 8:2, the thickness of the second functional layer was 10µm;
the substrate was polyimide (PI), the thickness of the substrate was 8µm.

### (2) Second binding material

The first adhesive layer was polyacrylamide (PAM) having added petroleum resin;
the second functional layer was a mixture of ethylene-vinyl acetate copolymer (EVA) and styrene-butadiene block copolymer (SEPS) according to a mass ratio of 8:2, the thickness of the second functional layer was 40µm;
the thickness of the substrate was 8µm.

### 6. Preparation of a lithium-ion secondary battery

Then the wound cell having the first binding material and the second binding materials was put into the package, the electrolyte was injected, then at 60°C, a 1.5MPa surface pressure was applied respectively on surfaces of the package of the wound cell corresponding to positions where the first binding material and the second binding materials were adhered, to make the second functional layer adhered with the inner surface of the package, finally a lithium-ion secondary battery was completed.

### Example 13

The lithium-ion secondary battery was prepared the same as that in example 12 except the following:

### 5. Preparation of a binding material

### (1) First binding material

The first adhesive layer was polybutylene (PB) having added naphthenoid oil;
there was no substrate.

### (2) Second binding material

The width of the second binding material was 11 mm;
the thickness of the second functional layer was 20µm;
there was no substrate.

### 6. Preparation of a lithium-ion secondary battery

Then the wound cell having the first binding material and the second binding materials was put into the package, the electrolyte was injected, then at 85°C, a 0.2MPa surface pressure was applied respectively on surfaces of the package of the wound cell corresponding to positions where the first binding material and the second binding materials were adhered, to make the second functional layer adhered with the inner surface of the package, finally a lithium-ion secondary battery was completed.

### Example 14

The lithium-ion secondary battery was prepared the same as that in example 4 except the following:

### 5. Preparation of a binding material

### (1) First binding material

The width of the first binding material was 11 mm;
the first adhesive layer was polycaprolactam (PA-6) having added naphthenoid oil, the thickness of the first adhesive layer was 10µm;
the second functional layer was styrene-butadiene block copolymer (SEPS), the thickness of the second functional layer was 10µm;
the substrate was polyethylene terephthalate (PET);
the covering layer was Al₂O₃, the thickness of the covering layer was 5µm.

### (2) Second binding material

The first adhesive layer was polyacrylamide (PAM) having added petroleum resin, the thickness of the first adhesive layer was 10µm;
the second functional layer was a mixture of ethylene-vinyl acetate copolymer (EVA) and styrene-butadiene block copolymer (SEPS) according to a mass ratio of 8:2;
the substrate was polyethylene terephthalate (PET);
the covering layer was MgO, the thickness of the covering layer was 10µm.

### 6. Preparation of a lithium-ion secondary battery

Then the wound cell having the first binding material and the second binding materials was put into the package, the electrolyte was injected, then at 75°C, a 1.5MPa surface pressure was applied respectively on surfaces of the package of the cell corresponding to positions where the first binding material and the second binding materials were adhered, to make the second functional layer adhered with the inner surface of the package, finally a lithium-ion secondary battery was completed.

### Example 15

The lithium-ion secondary battery was prepared the same as that in example 4 except the following:

### 5. Preparation of a binding material

### (1) First binding material

The width of the first binding material was 12µm;
the first adhesive layer was polyisoprene (PI) having added naphthenoid oil;
the second functional layer was polypropylene (PP) having added petroleum resin;
the substrate was polyethylene terephthalate (PET), the thickness of the substrate was 20µm;
the covering layer was Al₂O₃, the thickness of the covering layer was 5µm.

### (2) Second binding material

The width of the second binding material was 12µm;
the first adhesive layer was polyisoprene (PI) having added naphthenoid oil;
the second functional layer was polypropylene (PP) having added petroleum resin;
the substrate was polyethylene terephthalate (PET), the thickness of the substrate was 20µm;
the covering layer was Mg₃N₂, the thickness of the covering layer was 5µm.

### 6. Preparation of a lithium-ion secondary battery

Then the wound cell having the first binding material and the second binding materials was put into the package, the electrolyte was injected, then at 25°C, a 1.0MPa surface pressure was applied respectively on surfaces of the package of the wound cell corresponding to positions where the first binding material and the second binding materials were adhered, to make the second functional layer adhered with the inner surface of the package, finally a lithium-ion secondary battery was completed.

### Example 16

The lithium-ion secondary battery was prepared the same as that in example 4 except the following:

### 4. Preparation of a cell

The prepared positive electrode plate, a PP separator and the negative electrode plate were laminated together to form a laminated cell with a thickness of 3.5mm, a width of 48mm and a length of 80mm.

### 5. Preparation of a binding material

### (1) First binding material

The first adhesive layer was polyisoprene (PI) having added naphthenoid oil;
the second functional layer was a mixture of polypropylene (PP) and styrene-butadiene block copolymer (SEPS) according to a mass ratio of 8:2;
the substrate was polyethylene terephthalate (PET), the thickness of the substrate was 20µm.

### (2) Second binding material

The first adhesive layer was polyisoprene (PI) having added naphthenoid oil;
the second functional layer was a mixture of polypropylene (PP) and styrene-butadiene block copolymer (SEPS) according to a mass ratio of 8:2;
the substrate was polyethylene terephthalate (PET), the thickness of the substrate was 20µm.

### 6. Preparation of a lithium-ion secondary battery

Referring to Figure 1 and Figure 2, the first adhesive layer of the first binding material and the first adhesive layer of the second binding material were directly adhered on the surfaces of the laminated cell respectively, wherein one first binding material was adhered on a surface of the laminated cell (that was the surface between the top and the bottom of the cell), two second binding materials were adhered on positions perpendicular to the width direction of the laminated cell and across and surrounding the bottom of the laminated cell, one second binding material was adhered on a position perpendicular to the width direction of the laminated cell and across and surrounding the top of the laminated cell, then the laminated cell having the first binding material and the second binding materials was put into the package, the electrolyte was injected, then at 60°C, a 1MPa surface pressure was applied respectively on surfaces of the package of the laminated cell corresponding to positions where the first binding material and the second binding materials were adhered, to make the second functional layer adhered with the inner surface of the package, finally a lithium-ion secondary battery was completed.

### Example 17

The lithium-ion secondary battery was prepared the same as that in example 4 except the following:

### 5. Preparation of a binding material

### (1) First binding material

The first adhesive layer was terpine resin;
the second functional layer was a mixture of ethylene-vinyl acetate copolymer (EVA) and epoxidized styrene-isopentadiene-styrene block copolymer (ESIS) according to a mass ratio of 9:4.

### (2) Second binding material

The first adhesive layer was terpine resin;
the second functional layer was a mixture of ethylene-vinyl acetate copolymer (EVA) and epoxidized styrene-isopentadiene-styrene block copolymer (ESIS) according to a mass ratio of 9:4.

### Example 18 (not forming part of the claimed invention)

The lithium-ion secondary battery was prepared the same as that in example 4 except the following:

### 5. Preparation of a binding material

### (1) First binding material

The first adhesive layer was polyisoprene (PI) having added naphthenoid oil;
the second functional layer was a mixture of ethylene-vinyl acetate copolymer (EVA) and styrene-butadiene block copolymer (SEPS) according to a mass ratio of 8:2;
the substrate was polyethylene terephthalate (PET), the thickness of the substrate was 20µm.

### (2) Second binding material

The first adhesive layer was polyisoprene (PI) having added naphthenoid oil;
the second functional layer was a mixture of ethylene-vinyl acetate copolymer (EVA) and styrene-butadiene block copolymer (SEPS) according to a mass ratio of 8:2;
the substrate was polyethylene terephthalate (PET), the thickness of the substrate was 20µm.

### 6. Preparation of an adhesive paper

The adhesive paper was a green glue with a length of 75mm and a width of 8mm, the green glue comprised polyethylene terephthalate (PET) as base material and acrylic resin as adhesive, the thickness of the polyethylene terephthalate (PET) was 7µm, the thickness of the acrylic resin was 8µm.

### 7. Preparation of a lithium-ion secondary battery

Referring to Figure 1 and Figure 2 and Figure 7, the adhesive paper was adhered on the surface of the wound cell where the ending was present, then one first adhesive layer of the first binding material was adhered on the corresponding adhesive paper adhered on the ending of the wound cell, the first adhesive layers of three second binding materials were adhered on the surface of the wound cell, wherein, two second binding materials were adhered respectively on positions perpendicular to the width direction of the wound cell and across and surrounding the bottom of the wound cell, one second binding material was adhered on a position perpendicular to the width direction of the wound cell and across and surrounding the top of the wound cell, then the wound cell having the first binding material and the second binding materials and the adhesive paper was placed into the package, the electrolyte was injected, then at 70°C, a 1.0MPa surface pressure was applied on surfaces of the package of the wound cell corresponding to positions where the first binding material and the second binding materials were adhered, to make the second functional layer adhered with the inner surface of the package, finally a lithium-ion secondary battery was completed.

### Comparative example 1

The lithium-ion secondary battery was prepared the same as that in example 2 except the following:

### 5. Preparation of a binding material

A width of the binding material was 20mm;
the first adhesive layer was acrylic resin;
the second functional layer was acrylic resin;
the substrate was polyethylene terephthalate (PET).

### 6. Preparation of a lithium-ion secondary battery

The wound cell having the binding material was put into the package, the electrolyte was injected, then at 25°C, a 1.0MPa surface pressure was applied on a surface of the package of the wound cell corresponding to a position where the binding material was adhered, to make the second functional layer adhered with the inner surface of the package, finally a lithium-ion secondary battery was completed.

Next testing processes and test results of lithium-ion secondary batteries of the present invention would be described.

### 1. Testing of the thickness of the lithium-ion secondary batteries

The main body of the lithium-ion secondary battery was put into a thickness tester, the tabs were exposed, the value of the thickness of the main body of the lithium-ion secondary battery was read and recorded, the thickness of the main body of the lithium-ion secondary battery was the thickness of the position where the thickness of the lithium-ion secondary battery was the biggest (that was the overlap area of the tab and the cell).

### 2. Testing of the drop test of the lithium-ion secondary batteries

The lithium-ion secondary battery was fixed into a drop test clamp with double-sided adhesive, the initial voltage of the lithium-ion secondary battery was tested and recorded as V₀, the six surfaces of the drop test clamp was sequentially numbered as No. 1, No. 2, No. 3, No. 4, No. 5 and No. 6, and the four comers of the drop test clamp was sequentially numbered as No. C1, No. C2, No. C3 and No. C4.

At 25°C, the drop test clamp was positioned on a test platform with a height of 1.5m, the lithium-ion secondary battery was dropped sequentially according to Nos. 1-6, then the lithium-ion secondary battery was dropped sequentially according to Nos. C1-C4, six cycles were conducted, then the drop test was completed, after standing for 1h, the final voltage of the lithium-ion secondary battery was tested and recorded as V₁.
(1) the voltage drop of the drop test was recorded as ΔV=V0-V1;
(2) observing whether the package of the lithium-ion secondary battery was demaged or top sealing was burst out;
(3) disassembling the lithium-ion secondary battery apart and observing whether the tabs of the cell were broken;
(4) disassembling the lithium-ion secondary battery apart and observing whether the separator on the two sides along the wide direction of the cell was shifted or wrinkled;
(5) disassembling the lithium-ion secondary battery apart and observing whether the positive electrode plate and the negative electrode plate were contacted with each other to establish internal short circuit;
(6) testing of the maximum adhesive overflow width

The dropped lithium-ion secondary battery sample was disassembled, the package was removed, the maximum adhesive overflow width was measured on the side of the cell having the binding material with a ruler, ten values were recorded along the lengh direction of the cell, an avarage value of the ten values was taken as the the maximum adhesive overflow width of the cell.

### 3. Testing of the cycle performance of the lithium-ion secondary batteries

The lithium-ion secondary battery was put into a thermostat oven under 25°C, the lithium-ion secondary battery was charged to 4.35V at a constant current of 0.5C, then the lithium-ion secondary battery was charged to 0.025C at a constant voltage of 4.35V, then the lithium-ion secondary battery was standed for 3min, then the lithium-ion secondary battery was discharged to 3.0V at a constant current of 0.5C, which was a charge-discharge cycle, the charge-discharge cycle was repeated for 800 times, observing whether there was a short circuit, 50 lithium-ion secondary batteries were tested for each of examples and comparative examples, and the pass rate of the lithium-ion secondary battery was calculated.
Table 1 illustrated parameters of examples 1-18 and comparative example 1.
Table 2 illustrated test results of examples 1-18 and comparative example 1.

It could be seen from a comparison between examples 1-18 and comparative example 1, the lithium-ion secondary battery of the present invention had a smaller thickness, a higher pass rate of the drop test, and a higher pass rate of none short circuit after the cycle test. This was because comparative example 1 used a normnal double-sided acrylic resin adhesive, the two surfaces all were adhesive at room temperature, causing the position between the cell adhered with the normnal double-sided acrylic resin adhesive and the package was difficult to adjust when they were adhered with each other, and also the adhesive strength of the normnal double-sided acrylic resin adhesive was relatively small, therefore it must increase the width of the normnal double-sided acrylic resin adhesive in order to achieve a better adhesive strength, so as to increase the adhesive area, and in turn increase the adhesive strength. Because the region of the maximum thickness of the lithium-ion secondary battery was the overlap region of the tab and the cell, and as the width of the normnal double-sided acrylic resin adhesive was bigger, the distance to this region was smaller, and would have a bigger effect on the whole thickness of the lithium-ion secondary battery, moreover, the normnal double-sided acrylic resin adhesive was unable to realize the adhesive overflow, which would also increase the whole thickness of the lithium-ion secondary battery.

It could be seen from a comparison among examples 1-3, the maximum adhesive overflow width of the binding material after heat pressing increased as the thickness of the second functional layer increased, and as the maximum adhesive overflow width increased, the adhesive strength between the cell and the package increased, the pass rate of none package demaged or none top sealing burst was increased. It could be seen from a comparison among example 2 and examples 4-5, example 4 added three binding materials on the top and bottom of the cell, which not only increased the adhesive strength between the cell and the package, improved the pass rate of none package damaged or none top sealing burst, but also the binding materials on the top and bottom and the overflowed adhesive thereof might effectively adhere the separator respectively on the top and the bottom of the cell, therefore the separator would not be shifted or wrinkled after the lithium-ion secondary battery was dropped, the electrode plates would not be contacted to each other to cause an internal short circuit and the cell would not cause a short circuit after the cycle test. Moreover, example 5 further added the green glue at the ending of the cell, which could also bring the same effect as that in example 4.

It could be seen from a comparison between example 4 and example 6, because example 6 was pressed at room temperature, no binding material was softened to extrude out (that was the maximum adhesive overflow width was 0), the adhesive area between the cell and the package was smaller, the adhesive effect of the separator on the top and bottom of the cell was worsen, therefore a part of the separator was shifted or wrinkled after the lithium-ion secondary battery was dropped.

It could be seen from a comparison between example 7 and example 8, the first adhesive layer and the second functional layer of example 8 were all added with inorganic additive Al₂O₃, so the maximum adhesive overflow width was smaller than that of example 7 under the same condition, and the first adhesive layer and the second functional layer would not flow to the sealing edge to cause a poor sealing. This was because the use of the inorganic additive Al₂O₃ might effectively control the homogeneous flow of the first adhesive layer and the second functional layer. At the same time, because the maximum adhesive overflow width was the biggest, the distance between region of the adhesive overflow and the overlap region of the tab and cell was smaller, which easily caused the thickness of the main body of the lithium-ion secondary battery to be bigger.

It could be seen from a comparison among examples 9-11, when the second functional layer was only pressure sensitive adhesive, as the pressure applied on the second functional layer increased, the pass rate of the lithium-ion secondary battery passed the drop test and the pass rate of the lithium-ion secondary battery with none short circuit after the cycle test increased. This was because as the pressure applied on the second functional layer increased, the adhesive force of the second functional layer correspondingly increased.

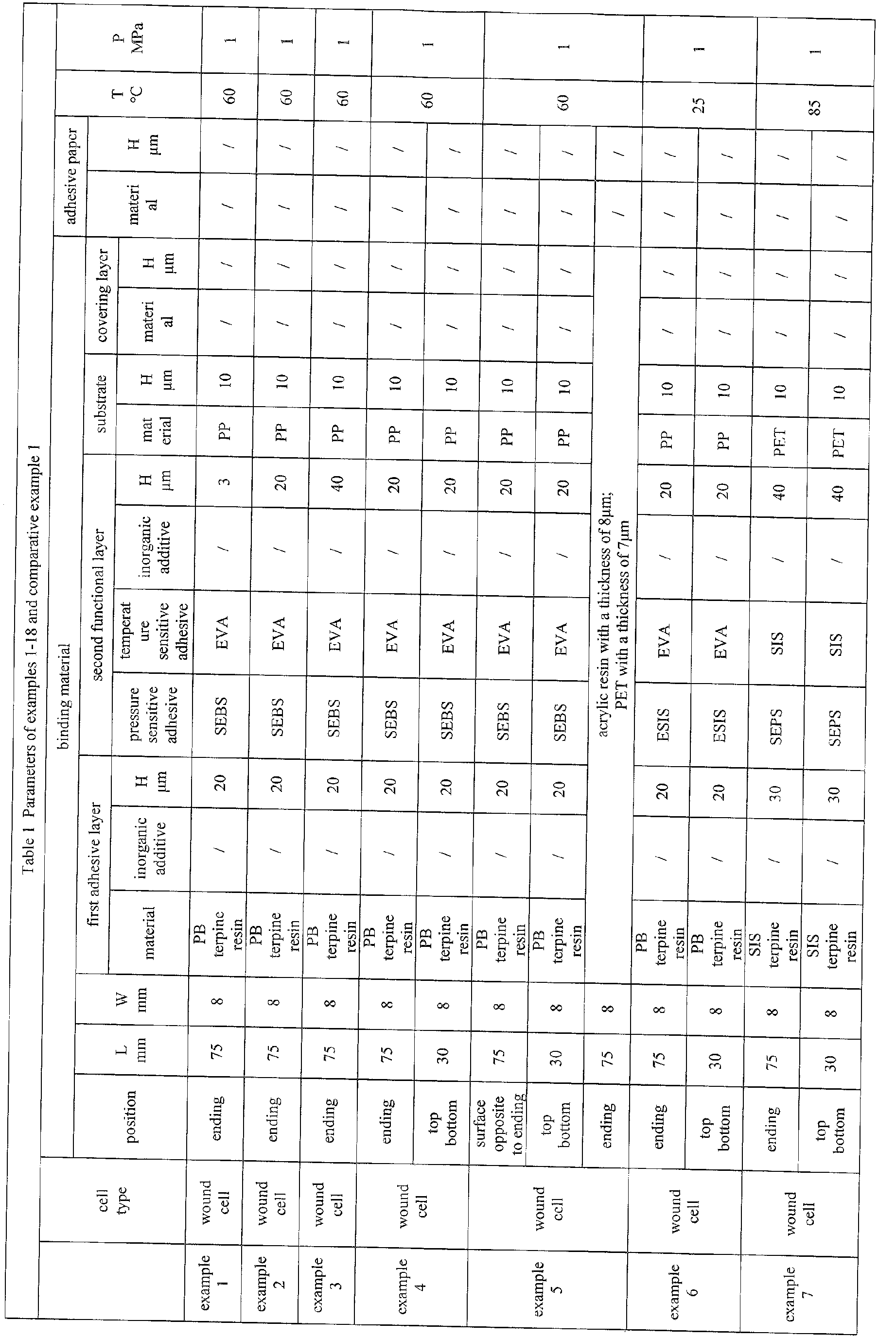

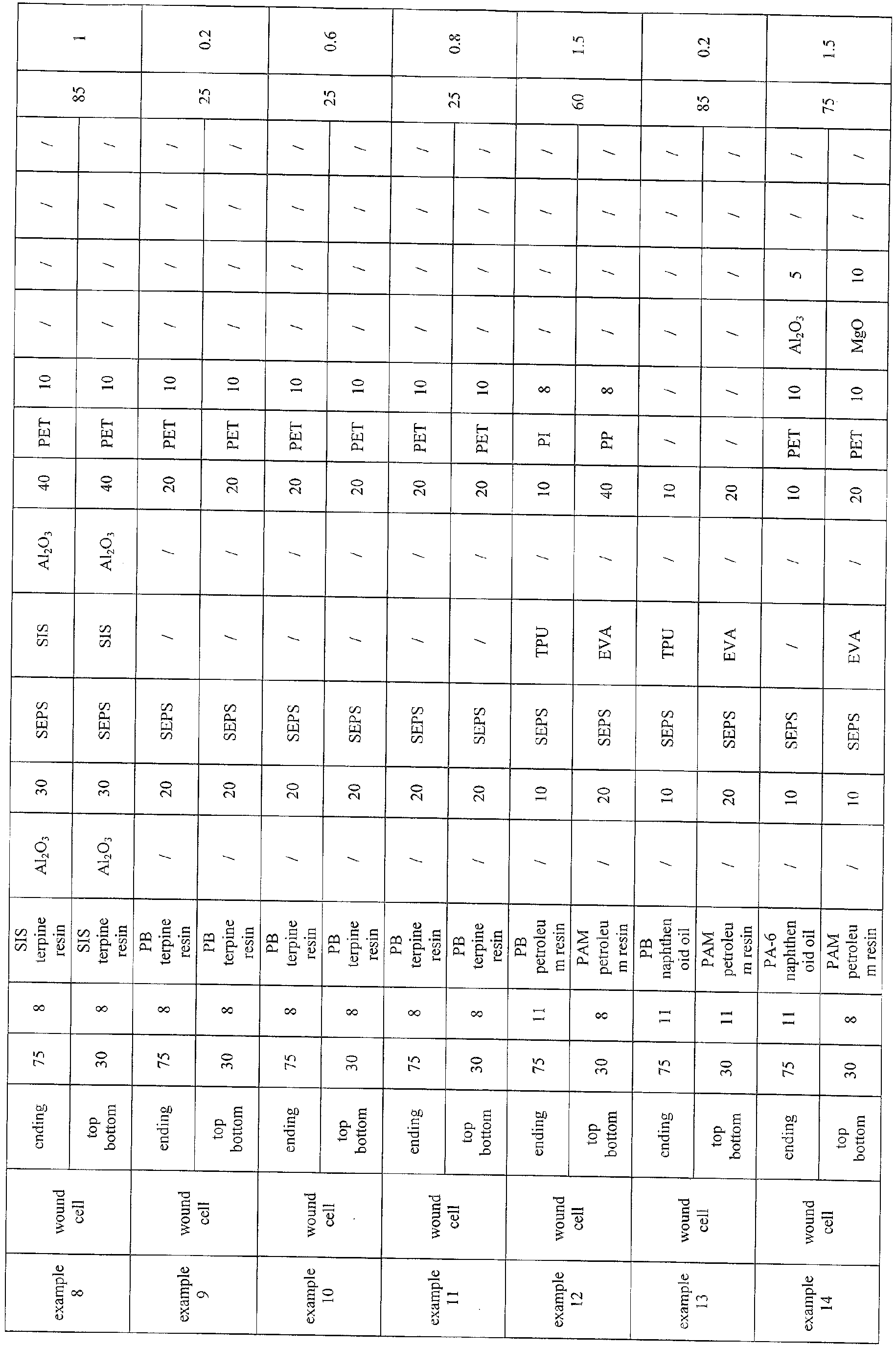

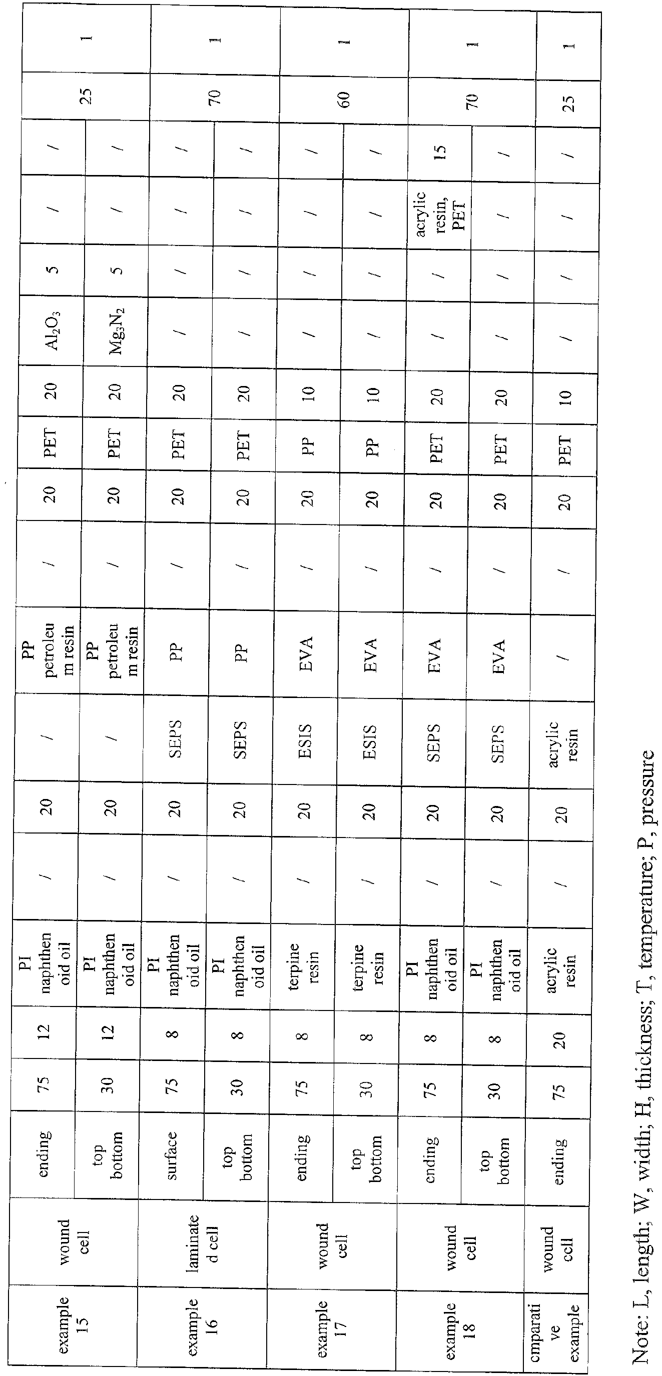

| Table 2 Test results of examples 1-18 and comparative example 1 | | | | | | | | | |
|---|---|---|---|---|---|---|---|---|---|
| | thickness of lithium-ion secondary battery mm | maximum adhesive overflow width mm | pass rate of drop test | | | | | no short circuit after cycling | sealing |
| | | | no voltage drop | no package demaged or top sealing burst | no tab broken | no separator shift or wrinkle | no electrode plate internal short circuit | | |
| example 1 | 3.65 | 1 | 80% | 90% | 95% | 60% | 80% | 80% | pass |
| example 2 | 3.65 | 2 | 80% | 95% | 95% | 60% | 80% | 80% | pass |
| example 3 | 3.65 | 3 | 80% | 100% | 100% | 60% | 80% | 80% | pass |
| example 4 | 3.65 | 2 | 100% | 100% | 100% | 100% | 100% | 100% | pass |
| example 5 | 3.65 | 2 | 100% | 100% | 100% | 100% | 100% | 100% | pass |
| example 6 | 3.65 | 0 | 95% | 100% | 100% | 90% | 95% | 90% | pass |
| example 7 | 3.68 | 8 | 100% | 100% | 100% | 100% | 100% | 100% | no pass |
| example 8 | 3.65 | 5 | 100% | 100% | 100% | 100% | 100% | 100% | pass |
| example 9 | 3.65 | 0 | 50% | 50% | 60% | 50% | 50% | 50% | pass |
| example 10 | 3.65 | 0 | 90% | 90% | 95% | 90% | 90% | 90% | pass |
| example 11 | 3.65 | 0 | 100% | 100% | 100% | 95% | 100% | 95% | pass |
| example 12 | 3.65 | 2 | 100% | 100% | 100% | 100% | 100% | 100% | pass |
| example 13 | 3.65 | 2 | 100% | 100% | 100% | 100% | 100% | 100% | pass |
| example 14 | 3.65 | 2 | 100% | 100% | 100% | 100% | 100% | 100% | pass |
| example 15 | 3.65 | 0 | 100% | 100% | 100% | 100% | 100% | 100% | pass |
| example 16 | 3.65 | 4 | 100% | 100% | 100% | 100% | 100% | 100% | pass |
| example 17 | 3.65 | 2 | 100% | 100% | 100% | 100% | 100% | 100% | pass |
| example 18 | 3.65 | 4 | 100% | 100% | 100% | 100% | 100% | 100% | pass |
| comparative example 1 | 3.70 | 0 | 50% | 60% | 70% | 50% | 50% | 50% | pass |

## Claims

1. An electrochemical energy storage device, comprising:
a cell (1) composed of a positive electrode plate, a negative electrode plate and a separator positioned between the positive electrode plate and the negative electrode plate;
an electrolyte immersing the cell (1); and
a package (2) accommodating the cell (1) and the electrolyte;
**characterized in that**:
the electrochemical energy storage device further comprises:
a binding material (3) positioned between the cell (1) and the package (2), and comprising:
a first adhesive layer (31) directly adhered on an outer surface of the cell (1); and
a second functional layer (32) positioned on a side of the first adhesive layer (31) opposite to a surface of the first adhesive layer (31) directly adhered on the cell (1), the second functional layer (32) being selected from a pressure sensitive adhesive or a composite material composited by the pressure sensitive adhesive and a temperature sensitive adhesive, the second functional layer (32) being not directly adhered to the package (2) before a pressure is applied on the electrochemical energy storage device, and the second functional layer (32) being directly adhered to the package (2) after the pressure is applied on the electrochemical energy storage device.

2. The electrochemical energy storage device according to Claim 1, **characterized in that**:
the first adhesive layer (31) is at least one selected from a group consisting of a temperature sensitive adhesive and a pressure sensitive adhesive;
the temperature sensitive adhesive for the first adhesive layer (31) is at least one selected from a group consisting of terpine resin, petroleum resin, naphthenic oil, polyolefine, polyvinyl butyral, polyamide, ethylene-vinyl acetate copolymer, styrene-isopentadiene-styrene block copolymer and polyester, the naphthenic oil cannot be used independently;
the pressure sensitive adhesive for the first adhesive layer (31) is at least one selected from a group consisting of acrylic resin, thermosetting polyurethane, silicone, natural rubber and synthetic rubber.

3. The electrochemical energy storage device according to Claim 2, **characterized in that**: the first adhesive layer (31) further comprises an inorganic additive, the inorganic additive is at least one selected from a group consisting of Al₂O₃ and SiO₂.

4. The electrochemical energy storage device according to Claim 1, **characterized in that**:
the pressure sensitive adhesive for the second functional layer (32) is at least one selected from a group consisting of ethylene-butylenes-styrene linear triblock copolymer, styrene-butadiene block copolymer and epoxidized styrene-isopentadiene-styrene block copolymer;
the temperature sensitive adhesive for the second functional layer (32) is at least one selected from a group consisting of polyolefine, polyvinyl butyral, polyamide, ethylene-vinyl acetate copolymer, styrene-isopentadiene-styrene block copolymer and polyester.

5. The electrochemical energy storage device according to Claim 4, **characterized in that**: the second functional layer (32) further comprises an inorganic additive, the inorganic additive is at least one selected from a group consisting of Al₂O₃ and SiO₂.

6. The electrochemical energy storage device according to Claim 1, **characterized in that**: the binding material (3) further comprises a substrate (33) positioned between the first adhesive layer (31) and the second functional layer (32).

7. The electrochemical energy storage device according to Claim 1, **characterized in that**: the binding material (3) further comprises:
a covering layer (34) positioned on an outer surface of the second functional layer (32), the covering layer (34) is all or partly destroyed.

8. The electrochemical energy storage device according to Claim 7, **characterized in that**: the second functional layer (32) further comprises an inorganic additive, the inorganic additive is at least one selected from a group consisting of Al₂O₃ and SiO₂.

9. The electrochemical energy storage device according to Claim 6, **characterized in that**: the binding material (3) further comprises:
a covering layer (34) positioned on an outer surface of the second functional layer (32), the covering layer (34) is all or partly destroyed.

10. The electrochemical energy storage device according to Claim 9, **characterized in that**: the second functional layer (32) further comprises an inorganic additive, the inorganic additive is at least one selected from a group consisting of Al₂O₃ and SiO₂.

## Patentansprüche

1. Elektrochemische Energiespeichervorrichtung, umfassend:
eine Zelle (1), die aus einer positiven Elektrodenplatte, einer negativen Elektrodenplatte und einem zwischen der positiven Elektrodenplatte und der negativen Elektrodenplatte positionierten Separator besteht;
einen Elektrolyt, in den die Zelle (1) getaucht ist; und
eine Packung (2), die die Zelle (1) und den Elektrolyt aufnimmt;
**dadurch gekennzeichnet, dass**
die elektrochemische Energiespeichervorrichtung ferner umfasst:
ein Bindematerial (3), das zwischen der Zelle (1) und der Packung (2) positioniert ist, und umfassend:
eine erste Klebstoffschicht (31), die direkt an einer Außenfläche der Zelle (1) klebt; und
eine zweite funktionale Schicht (32), die auf einer Seite der ersten Klebstoffschicht (31) entgegengesetzt zu einer Fläche der ersten Klebstoffschicht (31) positioniert ist, die direkt an die Zelle (1) geklebt ist, wobei die zweite funktionale Schicht (32) aus einem druckempfindlichen Klebstoff oder einem Kompositmaterial gewählt ist, das aus dem druckempfindlichen Klebstoff und einem temperaturempfindlichen Klebstoff zusammengesetzt ist, wobei die zweite funktionale Schicht (32) nicht direkt an der Packung (2) klebt, bevor ein Druck auf die elektrochemische Energiespeichervorrichtung ausgeübt wird, und die zweite funktionale Schicht (32) direkt an der Packung (2) klebt, nachdem der Druck auf die elektrochemische Energiespeichervorrichtung ausgeübt ist.

2. Elektrochemische Energiespeichervorrichtung nach Anspruch 1, **dadurch gekennzeichnet, dass**:
die erste Klebstoffschicht (31) zumindest eine ist, die aus einer Gruppe gewählt ist, die aus einem temperaturempfindlichen Klebstoff und einem druckempfindlichen Klebstoff besteht;
der temperaturempfindliche Klebstoff für die erste Klebstoffschicht (31) zumindest einer ist, der aus einer Gruppe gewählt ist, die aus Terpenharz, Petroleumharz, naphthenisches Öl, Polyolefin, Polyvinylbutyral, Polyamid, Ethylen-Vinylacetat- Copolymer, Styren-Isopentadien-Styren-Blockcopolymer und Polyester besteht, wobei das naphthenische Öl nicht unabhängig verwendet werden darf;
der drucksensitive Klebstoff für die erste Klebstoffschicht (31) zumindest einer ist, der aus der Gruppe gewählt ist, die aus Acrylharz, thermoplastischem Polyurethan, Silikon, Naturkautschuk und synthetischem Gummi besteht.

3. Elektrochemische Energiespeichervorrichtung nach Anspruch 2, **dadurch gekennzeichnet, dass**: die erste Klebstoffschicht (31) ferner ein anorganisches Additiv umfasst, wobei das anorganische Additiv zumindest eines ist, das aus der Gruppe gewählt ist, die aus Al₂O₃ und SiO₂ besteht.

4. Elektrochemische Energiespeichervorrichtung nach Anspruch 1, **dadurch gekennzeichnet, dass**:
der druckempfindliche Klebstoff für die zweite funktionale Schicht (32) zumindest einer ist, der aus einer Gruppe gewählt ist, die umfasst: ein lineares Ethylen-Butylen-Styren-Triblockcopolymer, ein Styren-Butadien-Blockcopolymer und ein epoxidiertes Styren-Isopentadien-Styren-Blockcopolymer;
der druckempfindliche Klebstoff für die zweite funktionale Schicht (32) zumindest einer ist, der aus einer Gruppe gewählt ist, die aus Polyolefin, Polyvinylbutyral, Polyamid, Ethylen-Vinylacetat-Copolymer, Styren-Isopentadien-Styren-Blockcopolymer und Polyester besteht.

5. Elektrochemische Energiespeichervorrichtung nach Anspruch 4, **dadurch gekennzeichnet, dass** die zweite funktionale Schicht (32) ferner ein anorganisches Additiv umfasst, wobei das anorganische Additiv zumindest eines ist, das aus einer Gruppe gewählt ist, die aus Al₂O₃ und SiO₂ besteht.

6. Elektrochemische Energiespeichervorrichtung nach Anspruch 1, **dadurch gekennzeichnet, dass** das Bindematerial (3) ferner ein Substrat (33) umfasst, das zwischen der ersten Klebstoffschicht (31) und der zweiten funktionalen Schicht (32) positioniert ist.

7. Elektrochemische Energiespeichervorrichtung nach Anspruch 1, **dadurch gekennzeichnet, dass** das Bindematerial (3) ferner umfasst:
eine Deckschicht (34), die an einer Außenfläche der zweiten funktionalen Schicht (32) positioniert ist, wobei die Deckschicht (34) vollständig oder teilweise zerstört ist.

8. Elektrochemische Energiespeichervorrichtung nach Anspruch 7, **dadurch gekennzeichnet, dass** die zweite funktionale Schicht (32) ferner ein anorganisches Additiv umfasst, wobei das anorganische Additiv zumindest eines ist, das aus einer Gruppe gewählt ist, die aus Al₂O₃ und SiO₂ besteht.

9. Elektrochemische Energiespeichervorrichtung nach Anspruch 6, **dadurch gekennzeichnet, dass** das Bindematerial (3) ferner umfasst:
eine Deckschicht (34), die an einer Außenfläche der zweiten funktionalen Schicht (32) positioniert ist, wobei die Deckschicht (34) teilweise oder vollständig zerstört ist.

10. Elektrochemische Energiespeichervorrichtung nach Anspruch 9, **dadurch gekennzeichnet, dass** die zweite funktionale Schicht (32) ferner ein anorganisches Additiv umfasst, wobei das anorganische Additiv zumindest eines ist, das aus einer Gruppe gewählt ist, die aus Al₂O₃ und SiO₂ besteht.

## Revendications

1. Dispositif de stockage d'énergie électrochimique, comprenant :
une cellule (1) composée d'une plaque électrode positive, d'une plaque électrode négative et d'un séparateur positionné entre la plaque électrode positive et la plaque électrode négative ;
un électrolyte qui immerge la cellule (1) ; et
un emballage (2) qui loge la cellule (1) et l'électrolyte ;
**caractérisé en ce que** :
le dispositif de stockage d'énergie électrochimique comprend en outre :
un matériau de liaison (3) positionné entre la cellule (1) et l'emballage (2), et comprenant :
- une première couche adhésive (31) directement en adhésion sur une surface extérieure de la cellule (1) ; et
- une seconde couche fonctionnelle (32) positionnée sur un côté de la première couche adhésive (31) opposée à une surface de la première couche adhésive (31) directement en adhésion sur la cellule (1), la seconde couche fonctionnelle (32) étant sélectionnée parmi un adhésif sensible à la pression ou bien un matériau composite composé de l'adhésif sensible à la pression et d'un adhésif sensible à la température, la seconde couche fonctionnelle (32) n'étant pas directement en adhésion sur l'emballage (2) avant qu'une pression soit appliquée sur le dispositif de stockage d'énergie électrochimique, et la seconde couche fonctionnelle (32) étant directement en adhésion sur l'emballage (2) après que la pression ait été appliquée sur le dispositif de stockage d'énergie électrochimique.

2. Dispositif de stockage d'énergie électrochimique selon la revendication 1, **caractérisé en ce que** :
la première couche adhésive (31) est au moins un adhésif sélectionné parmi un groupe comprenant un adhésif sensible à la température et un adhésif sensible à la pression ;
l'adhésif sensible à la température pour la première couche adhésive (31) est d'au moins un matériau sélectionné parmi un groupe comprenant résine de terpine, résine de pétrole, huile naphténique, polyoléfine, butyral de polyvinyle, polyamide, copolymère éthylène-vinylacétate, copolymère bloc styrène-isopentadiène-styrène, et polyester, l'huile naphténique ne pouvant pas être utilisée indépendamment ;
l'adhésif sensible à la pression pour la première couche adhésive (31) est d'au moins un matériau sélectionné parmi un groupe comprenant résine acrylique, polyuréthane thermodurcissable, silicone, caoutchouc naturel et caoutchouc synthétique.

3. Dispositif de stockage d'énergie électrochimique selon la revendication 2, **caractérisé en ce que** la première couche adhésive (31) comprend en outre un additif inorganique, l'additif inorganique étant au moins un sélectionné parmi un groupe comprenant Al₂O₃ et SiO₂.

4. Dispositif de stockage d'énergie électrochimique selon la revendication 1, **caractérisé en ce que** :
l'adhésif sensible à la pression pour la seconde couche fonctionnelle (32) est d'au moins un matériau sélectionné parmi un groupe comprenant copolymère tribloc linéaire éthylène-butylène-styrène, copolymère bloc styrène-butadiène, et copolymère bloc styrène-isopentadiène-styrène époxydé ;
l'adhésif sensible à la température pour la seconde couche fonctionnelle (32) est d'au moins un matériau sélectionné parmi un groupe comprenant polyoléfine, butera de polyvinyle, polyamide, copolymère éthylène-vinylacétate, copolymère bloc styrène-isopentadiène-styrène, et polyester.

5. Dispositif de stockage d'énergie électrochimique selon la revendication 4, **caractérisé en ce que** la seconde couche fonctionnelle (32) comprend en outre un additif inorganique, et l'additif inorganique étant au moins un sélectionné parmi un groupe comprenant Al₂O₃ et SiO₂.

6. Dispositif de stockage d'énergie électrochimique selon la revendication 1, **caractérisé en ce que** le matériau de liaison (3) comprend en outre un substrat (33) positionné entre la première couche adhésive (31) et la seconde couche fonctionnelle (32).

7. Dispositif de stockage d'énergie électrochimique selon la revendication 1, **caractérisé en ce que** le matériau de liaison (3) comprend en outre :
une couche de couverture (34) positionnée sur une surface extérieure de la seconde couche fonctionnelle (32), la couche de couverture (34) étant totalement ou partiellement détruite.

8. Dispositif de stockage d'énergie électrochimique selon la revendication 7, **caractérisé en ce que** la seconde couche fonctionnelle (32) comprend en outre un additif inorganique, l'additif inorganique étant au moins un sélectionné parmi un groupe comprenant Al₂O₃ et SiO₂.

9. Dispositif de stockage d'énergie électrochimique selon la revendication 6, **caractérisé en ce que** le matériau de liaison (3) comprend en outre :
une couche de couverture (34) positionnée sur une surface extérieure de la seconde couche fonctionnelle (32), la couche de couverture (34) étant totalement ou partiellement détruite.

10. Dispositif de stockage d'énergie électrochimique selon la revendication 9, **caractérisé en ce que** la seconde couche fonctionnelle (32) comprend en outre un additif inorganique, l'additif inorganique étant au moins un sélectionné parmi un groupe comprenant Al₂O₃ et SiO₂.
